# EUROPEAN PATENT SPECIFICATION

(11) **EP 0 979 248 B1**
(45) Date of publication and mention of the grant of the patent: **22.08.2001**
(21) Application number: 98928249.6
(22) Date of filing: 29.04.1998
(51) Int. Cl.: C08G 63/78, C08J 11/02

(54) **PURIFICATION OF BY-PRODUCT STREAM IN PREPARATION OF POLYTRIMETHYLENE TEREPHTHALATE**
REINIGUNG DES NEBENPRODUKTES BEI DER HERSTELLUNG VON POLYTRIMETHYLENTEREPHTALAT
PURIFICATION D'UN COURANT DE SOUS-PRODUITS DANS LA PREPARATION DE POLYTRIMETHYLENE TEREPHTALATE

(30) Priority: 30.04.1997 US 846300
(43) Date of publication of application: 16.02.2000
(73) Proprietor: SHELL INTERNATIONALE RESEARCH MAATSCHAPPIJ B.V., 2596 HR Den Haag (NL)
(72) Inventor: CHUAH, Hoe, Hin, Houston, TX 77095 (US)
(86) International application number: EP9802784
(87) International publication number: WO9849216

(56) References cited:
- EP-A- 0 309 915
- EP-A- 0 547 553
- DE-A- 1 793 126
- US-A- 3 373 211
- US-A- 4 611 049
- US-A- 5 459 229
- US-A- 5 527 973
- US-A- 5 688 898
- W. GERHARTZ ET AL, ED.: "Ullmann's Encyclopedia of Industrial Chemistry, Vol. A1: Acrolein and Methacrolein" 1985 , VCH VERLAGSGESELLSCHAFT , WEINHEIM XP002078260 see page 151 - page 152 see page 155
- DATABASE WPI Section Ch, Week 9703 Derwent Publications Ltd., London, GB; Class A23, AN 97-029470 XP002078262 & JP 08 291091 A (FUJI PHOTO FILM CO LTD) , 5 November 1996
- CHEMICAL ABSTRACTS, vol. 122, no. 13, 27 March 1995 Columbus, Ohio, US; abstract no. 159202, XP002078261 & G. WANG ET AL.: SHIPIN YU FAJIAO GONGYE, no. 4, 1994, pages 1-7,

## Description

This invention relates to the preparation of polytrimethylene terephthalate. In one aspect, the invention relates to purification of one or more by-product streams generated during the manufacture of polytrimethylene terephthalate. In a specific aspect, the invention relates to treatment of a methanol by-product stream from the manufacture of polytrimethylene terephthalate so as to permit biological treatment of the stream.

Polytrimethylene terephthalate (PTT) is a polyester useful in making fibers for carpets and textiles. PTT can be prepared by reacting 1,3-propanediol and dimethyl terephthalate (DMT) in a two-step process which includes a transesterification step in which an excess of 1,3-propanediol is transesterified under pressure with the DMT to make a low molecular weight intermediate, followed by a polycondensation step in which this intermediate is heated under vacuum to produce a high molecular weight polyester. Methanol is produced as a by-product in the first step and is removed to drive the reaction. In the second step, excess PDO is drawn off overhead and condensed. In each of the overhead methanol and PDO streams, carbonyl-containing impurities such as acrolein can be present as an unwanted by-product, particularly at higher polymerization reaction temperatures.

Although it would be desirable to recover the methanol or, alternatively, to pass the methanol stream to biological treatment, the introduction of the impurities along with the methanol could interfere with the downstream process and the biological activity of the treatment enzymes. In the case of the excess PDO stream, it would be desirable tc recycle this monomer back to the reaction, but a build-up of by-product carbonyls in the reaction could interfere with the production of high-quality polyester.

It is known to purify a PDO-containing by-product stream by adding a substantial amount of water, acidifying the solution, and then distilling the PDO under basic conditions. It would be desirable to recover purified PDO from the by-product stream without the necessity of adding large quantities of water or a liquid acid to the system.

It is therefore an object of the invention to provide a process for preparing polytrimethylene terephthalate in which methanol and/or 1,3-propanediol relatively free of acrolein impurity is recovered from distillate streams for subsequent processing.

### Brief Summary of the Invention

According to the invention, polytrimethylene terephthalate is prepared by (i) contacting dimethyl terephthalate with a molar excess of 1,3-propanediol under transesterification conditions to prepare a trimethylene terephthalate oligomer and a first by-product vapour stream comprising methanol and carbonyl compounds, and (ii) subjecting the trimethylene terephthalate oligomer to vacuum polycondensation conditions to prepare polytrimethylene terephthalate while removing and condensing a second by-product vapour stream comprising excess 1,3-propanediol and carbonyl compounds, the improvement being, passing the first by-product stream in contact with an acid or acidic ion exchange resin at a temperature within the range of about 20 to about 50 °C for a time effective to reduce the concentration of carbonyl compounds in said first by-product stream.

Optionally, the process further includes passing the second by-product stream in contact with an acid catalyst or an acidic ion exchange resin at a temperature within the range of about 20 to about 50 °C for a time effective to reduce the concentration of carbonyl compounds in the second by-product stream, and returning the thus-treated second by-product stream back to the reaction mixture.

### Detailed Description of the Invention

The invention process involves treatment of a carbonyl-containing by-product stream in the preparation of polytrimethylene terephthalate. As used herein, "carbonyl" refers to a compound, whether containing the C=0 group or not, detected by ASTM E411-70 in which total carbonyls are determined by conversion to 2,4-nitrophenylhydrazone derivatives and measured calorimetrically. The source of such carbonyl species can be acetals, aldehydes or ketones.

The carbonyl-containing composition is a distillate stream from the preparation of polytrimethylene terephthalate. As used herein, "polytrimethylene terephthalate" refers to a polyester prepared from one or more diols at least 50 mole percent of which is 1,3-propanediol and one or more diesters at least 50 mole percent of which is dimethyl terephthalate. Polytrimethylene terephthalate polymers can be prepared by the transesterification reaction of a molar excess of the diol(s) including 1,3-propanediol with the diester(s) including dimethyl terephthalate under nitrogen gas, at a temperature within the range of about 180 to about 250 °C, followed by polycondensation under vacuum at a temperature within the range of about 200 to about 280 °C. Transesterification is preferably carried out in the presence of a transition metal catalyst such as titanium butoxide. By-product methanol from the transesterification step is removed overhead and condensed as the reaction pressure is released prior to the polycondensation step. The reaction conditions are selected so as to produce a relatively low molecular weight polyester having an intrinsic viscosity measured in hexafluoroisopropanol of less than about 0.3 dl/g.
The carbonyl content (as C=O) of the methanol stream can be as high as about 500 ppm, depending upon the purity of the starting 1,3-propanediol, the polymerization reaction conditions and the polymerization catalyst used.

For the polycondensation step, the pressure on the reaction mixture is reduced and the oligomer product of the first step is heated at a temperature within the range of about 200 to about 280 °C under less than atmospheric pressure for a time effective to increase the intrinsic viscosity of the starting material to at least about 0.5. Excess diol is removed under vacuum during the polycondensation step and condensed as the reaction proceeds. The condensed 1,3-propanediol stream typically contains, in addition to about 65 to about 95 wt% 1,3-propanediol, polymerization by-products such as allyl alcohol, acrolein and other carbonyl compounds, acetals, glycol ethers, diacids, polyester oligomers and adducts, and about 1-20 wt% water. The excess 1,3-propanediol stream typically contains a lower concentration of carbonyl by-products than the methanol stream and may or may not require purification in order to permit recycle of the 1,3-propanediol.

Treatment of the methanol by-product stream involves passing the liquid stream in contact with an acid catalyst or an acid ion exchange resin at a temperature within the range of about 20 to about 50 °C. This can be accomplished, for example, by placement of the resin between the transesterification reaction vessel and the methanol collection vessel or, more preferably, in the methanol collection vessel so as to permit good contact of the methanol stream therewith. The time for treatment with the acid catalyst or ion exchange resin will usually range from about 1 to about 24 hours. The methanol product of the invention treatment process includes less than about 100 ppm acrolein, preferably less than about 10 ppm, and can be treated by biological processes. It has been shown (see Example 1) that the acrolein level in an untreated methanol stream will dissipate over time. The objective of the invention process is to achieve the target concentration in less than 24 hours and eliminate the necessity for by-product stream holding facilities.

Suitable acid ion exchange resins for the purification treatment include acidic AMBERLYST resins from Rohm and Haas such as AMBERLYST 15 and AMBERLYST A-31, and acidic or cationic polymeric resins, preferably those having sulfonic acid functional groups (AMBERLYST is a trade mark). The preferred resin is AMBERLYST A-32 Resin from Rohm & Haas.

Suitable acid catalysts for the purification treatment include organic acids such as p-toluene sulfonic acid, trichloroacetic acid, dichloroacetic acid, sulfonated phenol-aldehyde resin, malonic acid, maleic acid, naphthalene sulfonic acid and picric acid, and dilute inorganic acids such as sulfuric acid and hydrochloric acid. The preferred acid catalysts are p-toluenesulfonic acid, trichloracetic acid and dilute sulfuric acid.

Treatment of the excess 1,3-propanediol stream involves passing the liquid stream in contact with an acid catalyst or an acid ion exchange resin at a temperature with the range of about 20 to about 50 °C. This can be accomplished, for example, by placement of the resin between the polymerization reaction vessel and the 1,3-propanediol collection vessel or, more preferably, in the 1,3-propanediol collection vessel so as to permit good contact of the 1,3-propanediol stream therewith. Neutral catalysts such as calcium chloride and ammonium chloride can be added in minor amounts based on the acid. The time for treatment with the acid catalyst or ion exchange resin will usually range from about 1 to about 24 hours.

The molten polyester product of the polycondensation step is cooled, solidified and optionally formed into pellets. The polymer is then polycondensed in solid form ("solid-stated") at an elevated temperature less than the target polymer melt point, generally a temperature greater than about 180 °C, preferably about 200 °C, under reduced pressure and/or an inert gas stream. The solid-stating phase is carried out for a time, generally about 4 hours or more, to produce a polyester having an intrinsic viscosity of at least about 0.8, generally within the range of about 0.95 to about 1.15.

The invention can be practiced as a series of batch, semi-batch, semi-continuous or continuous processes.

The purified 1,3-propanediol can be used, for example, to prepare condensation polymers and copolymers. The purified 1,3-propanediol is particularly useful as a recycle stream to the polymerization reactor in the polytrimethylene terephthalate preparation process.

### Example 1

### Depletion of Acrolein in Untreated By-product Streams

Dimethyl terephthalate (265.4 g) and 1,3-propanediol (156.2 g) were reacted at 190-204 °C for 2.5 hr using 0.174 g of titanium butoxide transesterification catalyst. 97 ml of methanol were collected. The concentration of acrolein in this stream was determined by gas chromatography to be 402 ppm.

The reaction temperature was then raised to 250 °C and vacuum was applied to the intermediate. Excess 1,3-propanediol was taken off overhead and condensed. The measured acrolein in the PDO stream was 11 ppm.

The methanol stream was retested over the next 11 days, with the following concentrations of acrolein detected: 348 ppm (after 27.5 hrs); 121 ppm (after 166 hrs); and 64 ppm (after 263 hrs).

### Example 2

### Acid/Base Treatment for Lowering Acrolein Level in Methanol By-product Stream

Dimethyl terephthalate (318.5 g) and 1,3-propanediol (87.3 g) were reacted in the presence of a titanium butoxide transesterification catalyst (0.201 g) at 200 °C for 3.5 hrs. 83 ml of a condensed methanol stream was collected and divided into three 25 ml samples. One sample served as a control. A second sample was treated with 0.1029 g of p-toluene sulfonic acid. The third sample was treated with 0.5 ml of 0.5 N methanolic KOH solution. The amount of acrolein as a function of time in each of the three samples was analyzed by gas chromatography.

As can be seen from Table 1, the untreated control slowly decreased in acrolein concentration. The p-toluene sulfonic acid treated stream had a rapid decrease in acrolein level to 11 ppm after one hour and to about 6.5 ppm after one day, after which the by-product stream could be handled in a biotreater. The methanolic KOH stream showed an immediate reduction in acrolein concentration to about 35 ppm, with little subsequent change over time.

**Table 1**

| Acrolein Level in By-product Stream | | | | | |
|---|---|---|---|---|---|
| Control (Untreated) | | Treated with p-Toluene Sulfonic Acid | | Treated with Methanolic KOH | |
| Time (hours) | Acrolein Level (ppm) | Time (Hours) | Acrolein Level (ppm) | Time (Hours) | Acrolein Level (ppm) |
| 4.2 | 176.8 | 1.25 | 11.4 | 2.67 | 34.7 |
| 24.5 | 155.0 | 5.67 | 11.3 | 7.17 | 36.7 |
| 72.5 | 111.0 | 8.67 | 9.6 | 10.15 | 35.0 |
| 172.5 | 69.3 | 21.5 | 6.5 | 23.0 | 27.0 |
| | | 44.25 | 3.9 | 45.5 | 32.1 |
| | | 69.5 | 2.7 | 71.0 | 25.8 |
| | | 94.0 | 1.8 | 171.0 | 30.0 |
| | | 169.5 | 1.0 | | |

### Example 3

### Treatment of Methanol By-product Stream Vapour with Sulfonated Ion-Exchange Resin

Dimethyl terephthalate (159.3 g) and 1,3-propanediol (93.8 g) were reacted in the presence of a titanium butoxide transesterification catalyst (0.102 g) at 200 °C for 3.5 hours. Predried AMBERLYST A-32 Resin (4.0 g) was placed between the reaction flask and the condenser. The methanol by-product stream, analyzed immediately after collection, had an acrolein concentration of 23.3 ppm.

### Example 4

### In-situ Treatment of Methanol By-product Stream with Sulfonated Ion-Exchange Resin

Dimethyl terephthalate (159.3 g) and 1,3-propanediol (93.6 g) were reacted in the presence of a titanium butoxide transesterification catalyst (0.106 g) at 200 °C for 3.5 hours. Predried AMBERLYST A-32 Resin (4.0 g) was placed in the cold trap where the condensed methanol by-product stream was collected. The stream, analyzed for acrolein concentration immediately after collection, had an acrolein concentration of 7.4 ppm.

## Claims

1. In a process for preparing polytrimethylene terephthalate by (a) contacting, in a reaction mixture under transesterification conditions, dimethyl terephthalate and a molar excess of 1,3-propanediol to prepare a trimethylene terephthalate oligomer and a first by-product stream comprising methanol and at least one carbonyl compound, and (b) subjecting the trimethylene terephthalate oligomer to vacuum polycondensation conditions and preparing a polytrimethylene terephthalate while removing and condensing a second by-product stream comprising excess 1,3-propanediol and at least one carbonyl compound, the improvement comprising:
reducing the concentration of carbonyl compounds in said first by-product stream by contacting said first by-product stream with an acid catalyst at a temperature within the range of 20 to 50°C.

2. The process of claim 1 in which the acid catalyst is in the form of an ion exchange resin.

3. The process of claim 1 in which the first by-product stream comprises at least 100 ppm acrolein.

4. The process of claim 1 which further comprises reducing the concentration of carbonyl compounds in said second by-product stream by passing said second by-product stream in contact with an acid ion exchange resin at a temperature within the range of 20 to 50°C.

5. The process of claim 1 which further comprises passing the thus-treated first by-product stream to an active enzyme treatment process.

6. The process of claim 4 which further comprises returning the thus-treated second by-product stream to the reaction mixture.

7. The process of claim 4 in which the thus-treated second by-product stream contains less than 10 ppm acrolein.

8. The process of claim 1 in which the acid catalyst is p-toluene sulfonic acid.

9. The process of claim 2 in which the acid ion exchange resin is a sulfonated phenol-formaldehyde resin.

## Patentansprüche

1. In einem Verfahren zur Herstellung von Polytrimethylenterephthalat durch (a) Inberührungbringen von Dimethylterephthalat mit einem molarem Übeschuß an 1,3-Propandiol in einem Reaktionsgemisch unter Umesterungsbedingungen zur Ausbildung eines Trimethylenterephthalatoligomers und eines ersten Nebenproduktstroms mit einem Gehalt an Methanol und an wenigstens einer Carbonylverbindung und (b) Ausführen einer Polykondensation an dem Trimethylenterephthalatoligomer unter Vakuumpolykondensationsbedingungen und Ausbilden eines Polytrimethylenterephthalats, während ein zweiter Nebenproduktstrom mit einem Gehalt an überschüssigem 1,3-Propandiol und an wenigstens einer Carbonylverbindung abgetrennt und kondensiert wird, wobei die Verbesserung umfaßt:
Verringern der Konzentration von Carbonylverbindungen in dem ersten Nebenproduktstrom durch Inkontaktbringen dieses ersten Nebenproduktstroms mit einem Säurekatalysator bei einer Temperatur im Bereich von 20 bis 50°C.

2. Verfahren nach Anspruch 1, worin der Säurekatalysator in der Form eines Ionenaustauscherharzes vorliegt.

3. Verfahren nach Anspruch 1, worin der erste Nebenproduktstrom wenigstens 100 ppm Acrolein umfaßt.

4. Verfahren nach Anspruch 1, das weiterhin ein Verringern der Konzentration von Carbonylverbindungen in dem zweiten Nebenproduktstrom durch Führen dieses zweiten Nebenproduktstroms im Kontakt mit einem sauren Ionenaustauscherharz bei einer Temperatur im Bereich von 20 bis 50°C umfaßt.

5. Verfahren nach Anspruch 1, das weiterhin ein Führen des so behandelten ersten Nebenproduktstroms zu einem Aktivenzymbehandlungsverfahren umfaßt.

6. Verfahren nach Anspruch 4, das weiterhin ein Rückführen des so behandelten zweiten Nebenproduktstroms zum Reaktionsgemisch umfaßt.

7. Verfahren nach Anspruch 4, worin der so behandelte zweite Nebenproduktstrom weniger als 10 ppm Acrolein enthält.

8. Verfahren nach Anspruch 1, worin der Säurekatalysator p-Toluolsulfonsäure ist.

9. Verfahren nach Anspruch 2, worin das saure Ionenaustauscherharz ein sulfoniertes Phenolformaldehydharz ist.

## Revendications

1. Procédé de préparation de polytriméthylène téréphtalate par (a) la mise en contact, dans un mélange de réaction sous des conditions de transestérification, de diméthyl téréphtalate et d'un excès molaire de 1,3-propanediol pour préparer un oligomère de triméthylène téréphtalate et un premier courant de sous-produits comprenant du méthanol et au moins un composé carbonylé, et (b) le traitement en soumettant l'oligomère de triméthylène téréphtalate à des conditions de polycondensation sous vide et la préparation d'un polytriméthylène téréphtalate tout en évacuant et condensant un second courant de sous-produits comprenant un excès de 1,3-propanediol et au moins un composé carbonylé, le procédé précité comprenant :
la réduction de la concentration en composés carbonylés dans le premier courant de sous-produits par la mise en contact du premier courant de sous-produits avec un catalyseur d'acide à une température allant de 20 à 50°C.

2. Procédé suivant la revendication 1, dans lequel le catalyseur d'acide est sous la forme d'une résine échangeuse d'ions.

3. Procédé suivant la revendication 1, dans lequel le premier courant de sous-produits comprend au moins 100 ppm d'acroléine.

4. Procédé suivant la revendication 1, qui comprend de plus une réduction de la concentration de composés carbonylés dans le second courant de sous-produits précité en faisant passer le second courant de sous-produits au contact d'une résine échangeuse d'ions d'acide à une température allant de 20 à 50°C.

5. Procédé suivant la revendication 1, qui comprend de plus le passage du premier courant de sous-produits ainsi traité vers un procédé de traitement enzymatique actif.

6. Procédé suivant la revendication 4, qui comprend de plus le renvoi du second courant de sous-produits ainsi traité au mélange de réaction.

7. Procédé suivant la revendication 4, dans lequel le second courant de sous-produits ainsi traité contient moins de 10 ppm d'acroléine.

8. Procédé suivant la revendication 1, dans lequel le catalyseur d'acide est de l'acide p-toluènesulfonique.

9. Procédé suivant la revendication 2, dans lequel la résine échangeuse d'ions d'acide est une résine de phénol-formaldéhyde sulfonée.
